# EUROPÄISCHE PATENTSCHRIFT

(11) **EP 0 664 047 B1**
(45) Veröffentlichungstag und Bekanntmachung des Hinweises auf die Patenterteilung: **15.01.1997**
(21) Anmeldenummer: 94926163.0
(22) Anmeldetag: 08.08.1994
(51) Int. Cl.: H01F 7/16, H01H 50/32, H01H 13/58

(54) **BISTABLES MAGNETVENTIL**
BISTABLE MAGNETIC VALVE
ELECTROVANNE BISTABLE

(30) Priorität: 10.08.1993 DE 4326838
(43) Veröffentlichungstag der Anmeldung: 26.07.1995
(73) Patentinhaber: INTERELEKTRIK GESMBH & CO. KG, A-9500 Villach (AT)
(72) Erfinder: SEEMANN, Hans, A-9500 Villach (AT); ORTNER, Hans, A-9500 Villach (AT); PRESSLER, Walter, A-9500 Villach (AT)
(74) Vertreter: Bauer, Robert, Dipl.-Ing.
(86) Internationale Anmeldenummer: EP9402626
(87) Internationale Veröffentlichungsnummer: WO9504997

(56) Entgegenhaltungen:
- EP-A- 0 120 580
- EP-A- 0 446 770
- DE-A- 1 464 419
- DE-A- 2 620 495
- US-A- 2 922 861

## Beschreibung

Die Erfindung betrifft ein bistabiles Magnetventil gemäß Gattungsbegriff des Anspruchs 1.

Ein derartiges Magnetventil ist etwa aus der DE-OS 38 10 154 in der Form bekannt, daß der magnetische Kreis einen Permanentmagneten enthält, dessen Feld durch aufeinanderfolgende Gleichspannungs-Schaltimpulse unterschiedlicher Polarität abwechselnd verstärkt und geschwächt wird. Dieses Magnetventil hat gegenüber einem vergleichenbaren monostabilen Magnetventil den Vorteil, daß es nur jeweils kurze Schaltimpulse erfordert, daß es damit sparsam im Energieverbrauch ist und daß dementsprechend auch der für seine Auslegung in Rechnung zu stellende Wärmeanfall gering, wenn nicht gar vernachlässigbar ist. Indessen ist das Schaltsystem dieses bekannten Magnetventils verhältnismäßig aufwendig hinsichtlich Material und Herstellung, da es eine Abstimmung von Kräften und damit verhältnismäßig enge einzuhaltende Toleranzen erfordert. Dazu noch sind die für seinen Betrieb erforderlichen bipolaren Schaltmittel verhältnismäßig aufwendig.

Der Erfindung liegt von daher die Aufgabe zugrunde, ein einfacheres und entsprechend kostengünstiger herstellbares Magnetventil nach Gattungsbegriff zu schaffen, das überdies auch noch äußerst sparsam im Energieverbrauch ist.

Aus der DE-OS 1 464 419 ist bereits in bistabiles elektromagnetisches Schaltsystem mit einer einzigen Magnetwicklung und einem durch Federkraft rückstellbaren Tauchkern bekannt, das bevorzugt für elektrische Schalter Verwendung finden soll. Dieses Schaltsystem weist zur Fixierung des Tauchkerns in der einen seiner beiden Endstellungen ein ein- und ausklinkbares Gesperre mit einem längsgeführten ersten Rastglied, einem hiergegen längsverschiebbaren und in einer Überhubposition um eine Winkelteilung drehbaren zweiten Rastglied sowie einer stirnseitige Nockenzahnkränze der beiden Rastglieder in Eingriff haltenden Wendeldruckfeder auf - in ähnlicher Form, wie es auch bei mancherlei Schreibstiften Verwendung findet -.

Die Erfindung geht von der Überlegung aus, daß sich ein derartiges Schaltsystem in Verbindung mit einigen zusätzlichen Maßnahmen in besonderer Weise für die Lösung der vorstehend angegebenen Aufgabe eignet.

Diese Aufgabe ist demnach erfindungsgemäß durch die Kennzeichnungsmerkmale des Anspruchs 1 gelöst. Die Unteransprüche geben bevorzugte Ausführungsbeispiele an.

Die Verwendung eines Schaltsystems der vorausgehend beschriebenen bekannten Art und dabei die Unterbringung der beweglichen Gesperreteile samt Tauchkern in dem Kernführungsrohr, zu welchem das zu steuernde Medium Zutritt hat, ermöglichen eine ausgesprochene Leichtgängigkeit des Schaltsystems, die durch die Verwendung einer ebenfalls von dem Medium umgebenen einzigen gemeinsamen Feder innerhalb des Kernführungsrohres noch verbessert wird. Damit kommt das betreffende Magnetventil mit einem Geringstmaß an Betätigungsenergie aus, die es - etwa bei landwirtschaftlichen Bewässerungsanlagen und entlegenen Viehtränken - in besonderer Weise auch für Batteriebetrieb geeignet macht. Dies gilt um so mehr noch, wenn das Ventil gemäß Anspruch 8 ein servounterstütztes Ventil ist. Ein durch das gesteuerte Medium, servounterstütztes bistabiles Magnetventil ist freilich bereits der DE-OS 41 03 777 entnehmbar.

Im übrigen aber ist das beanspruchte Magnetventil außerordentlich einfach aufgebaut und entsprechend kostengünstig herstellbar, und Gleiches gilt auch für die Meldeschaltung nach den Ansprüchen 9 und 10.

Das Schaltsystem des beanspruchten Magnetventils kann im wesentlichen in der gleichen Dimensionieren und auch als Modul ausgebildet werden wie dasjenige vergleichbarer bekannter monostabiler Magnetventile, so daß es ohne weiteres an die Stelle des betreffenden monostabilen Schaltsystems treten kann.

Nachfolgend werden Ausführungsbeispiele des beanspruchten Magnetventils und der betreffenden Meldeschaltung anhand der Figuren genauer beschrieben. Dabei zeigen
- Fig. 1: einen Schnitt durch das betreffende Magnetventil, in diesem Beispiel in Gestalt eines servounterstützten Ventils,

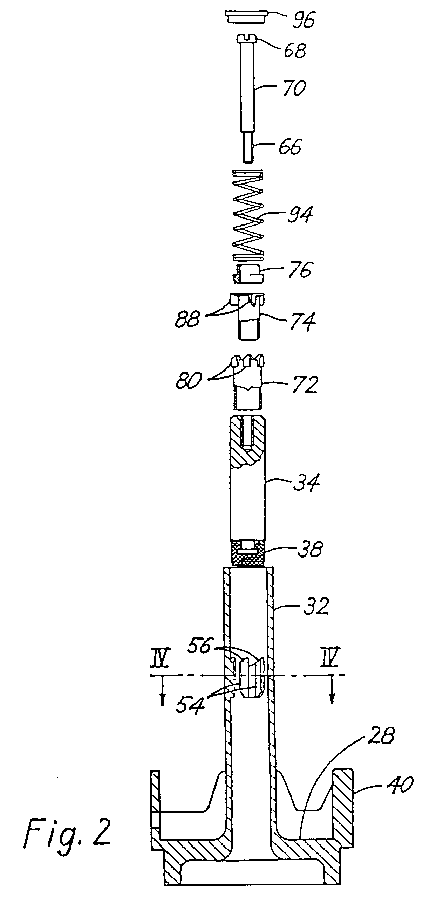

- Fig. 2: eine Explosionsdarstellung der Gesperreteile des betreffenden Magnetventils,

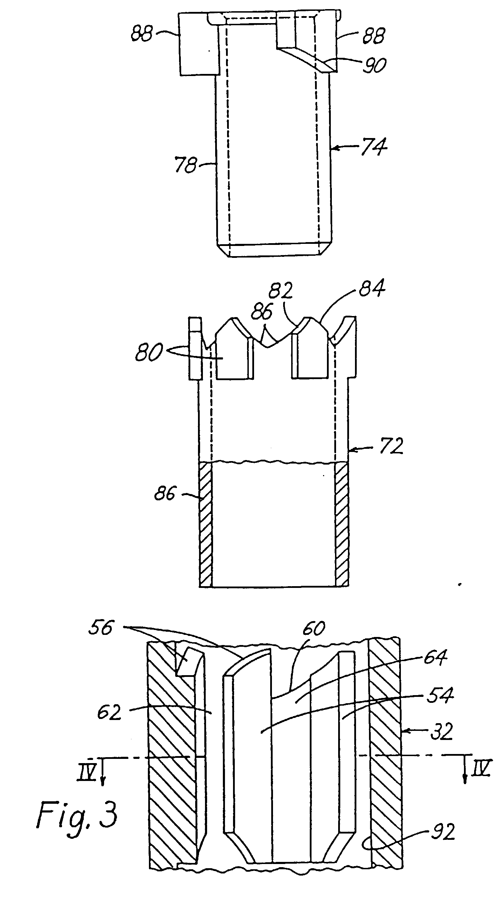

- Fig. 3: ein vergrößertes Detail aus Fig. 2, welches Einzelheiten des Gesperres besser erkennen läßt,

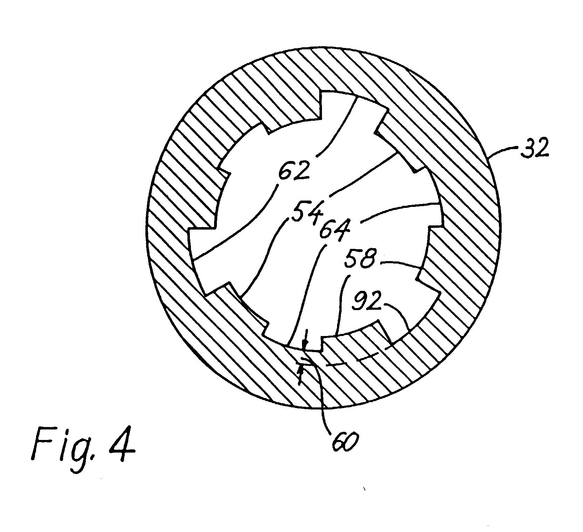

- Fig. 4: einen Querschnitt durch ein Kernführungsrohr des Schaltsystems gemäß Linie IV-IV in den Figuren 2 und 3,
- Fig. 5 - Fig. 7: schematisierte Darstellungen des Gesperres in verschiedenen Arbeitsphasen, jeweils in Abwicklung, und
- Fig. 8: ein Schaltschema einer bei dem beanspruchten Magnetventil anwendbaren elektrischen Meldeschaltung.

Das gezeigte Magnetventil 2 - ein solches, wie es bei üblichen Haushaltswaschmaschinen als Wassereinlaßventil Verwendung findet - weist ein einseitig offenes Gehäuse 4 mit einer darin ausgesparten Kammer 6 auf, in die ein Wassereinlaßstutzen 8 mündet und aus der ein engerer, zu der offenen Gehäuseseite 10 hin abgewinkelter Wasserauslaßstutzen 12 im wesentlichen gleichachsig mit dem Wassereinlaßstutzen 8 nach außen führt. In eine flache zylindrische Aussparung 14 an der offenen Gehäuseseite 10 ist eine aus Gummi oder dergl. bestehende Membran 16 eingesetzt, die auf einem wesentlichen Teil ihrer Fläche auf einem lose von der Membran gehaltenen Teller 18 aufzuliegen vermag. Der Teller 18 weist einen durch die Membran 16 hindurch zu der offenen Gehäuseseite 10 hin reichenden zentralen Ansatz 20 auf, der eine enge zentrale Durchbohrung 22 besitzt. Des weiteren weist die Membran 16 exzentrisch zu dem Ansatz 20 im Bereich des Tellers 18 eine kleine Öffnung 24 auf, durch die lose ein Stift 26 von dem Teller 18 her hindurchragt. Der freie Querschnitt der Öffnung 24 ist kleiner als der Querschnitt der Durchbohrung 22.

Durch einen mit dem Gehäuse 4 verschraubten Deckel 28, der einen passend in die zylindrische Aussparung 14 hineinragenden Ansatz 30 besitzt, wird die Membran 16 abdichtend an ihrem Platz gehalten. Koaxial zu dem Ansatz 30 weist der Deckel 28 außenseitig ein einstückig daran angeformtes Kernführungsrohr 32 auf, in dem ein Tauchkern 34 eines elektromagnetischen Schaltsystems 36 axialbeweglich geführt ist. Der Tauchkern 34 unterliegt einer Federkraft, die ihn gegen die Membran 16 zu drücken sucht. An seinem der Membran 16 zugekehrten Ende trägt der Tauchkern 34 eine Gummikappe 38, die ein Ventilglied für den Verschluß der Durchbohrung 22 des Ansatzes 20 als Pilotventil bildet.

Um das Kernführungsrohr 32 herum ist zwischen entsprechende Paß- und Rastmittel, wie zum Beispiel 40 und 42, auf der Außenseite des Deckels 28 eine samt ihren zugehörigen ortsfesten Kernteilen modulartige, gekapselte Magnetwicklung 44 des elektromagnetischen Schaltsystems 36 eingesetzt, die über (in der Figur hintereinanderliegend erscheinende) Anschlüsse 46 speisbar ist.

Insoweit ist das beschriebene Magnetventil 2 herkömmlich. Seine Wirkungsweise ist diejenige eines Servoventils. Bei durch die Gummikappe 38 verschlossener Durchbohrung 22 stellt sich über die Öffnung 24 auf der dem Deckel 28 zugekehrten Seite der Membran 16 infolge der grösseren freiliegenden Fläche eine größere Druckkraft ein als auf der der Kammer 6 zugewandten Seite, wodurch die Membran 16 abdichtend auf die innenseitige Mündung 48 des Wasserauslaßstutzens 12 gedrückt wird. Damit ist das Ventil geschlossen. Wird nun durch Betätigung des elektromagnetischen Schaltsystems 36 der Tauchkern 34 samt der Gummikappe 38 angehoben, so vermag Wasser aus dem deckelseitigen Raum 50 durch die Durchbohrung 22 hindurch in den Wasserauslaßstutzen 12 hinein auszutreten, schneller als es durch die Öffnung 24 hindurch zutreten kann. Dies führt dazu, daß nun innerhalb kurzer Zeit die Druckkraft an der Membran 16 auf der Seite der Kammer 6 überwiegt und die Membran von der Mündung 48 am Wasserauslaßstutzen 12 abgehoben wird. D.h. das Ventil öffnet. Die Öffnung des Ventils hält so lange an, wie die Gummikappe 38 von der Durchbohrung 22 abgehoben bleibt. Wird die Durchbohrung 22 geschlossen, so stellt sich wiederum der ursprüngliche, geschlossene Zustand des Ventils ein.

Im Unterschied zu herkömmlichen derartigen Magnetventilen ist nun das magnetische Schaltsystem 36 ein bistabiles, das mit kurzen Betätigungsimpulsen abwechselnd in den einen oder anderen seiner beiden Schaltzustände gebracht werden kann. Genauer gesagt wird dem Tauchkern 34 abwechselnd eine angehobene und eine Freigabestellung vermittelt, bei welch letzterer er von der auf ihm lastenden Federkraft gegen die Membran 16 gedrückt wird.

Erreicht wird dies dadurch, daß auf das der Membran 16 abgewandte Ende des Tauchkerns 34 ein Gesperremechanismus 52 aufgesetzt ist, der mit ortsfesten Gesperreteilen in Gestalt eines Kranzes von sechs längsverlaufenden Leisten 54 im Inneren des Kernführungsrohres 32 zusammenwirkt. Die Leisten 54 weisen an ihren der Membran 16 abgekehrten Enden Nockenzähne bildende schräge Stirnflächen 56 auf, und zwischen je zwei aufeinanderfolgenden Leistenpaaren 58 befindet sich eine relative Erhebung 60, so daß zwischen den aufeinanderfolgenden Leisten 54 miteinander abwechselnd tiefere und flachere Nuten 62 bzw. 64 bestehen. Über die flacheren Nuten 64 hinweg setzen sich die schrägen Stirnflächen 56 fort.

Der Gesperremechanismus 52 besteht aus einem in das außenseitige Ende des Tauchkerns 34 eingeschraubten, bis auf einen entsprechenden Gewindeansatz 66 und einen Kopf 68 am entgegengesetzten, äußeren Ende, zylindrischen Bolzen 70, der von dem Tauchkern 34 weg aufeinanderfolgend jedoch einander überlappend ein hohlzylindrisches Rastaußenteil 72, eine Rasthülse 74 und einen Federsitzring 76 trägt. Der letztere ist auf dem Bolzen 70 durch den Kopf 68 gesichert. Zumindest die Teile 72, 74 und 76 bestehen aus magnetisch neutralem Material. Durch ihre Anordnung in dem zu der Membran 16 hin offenen Kernführungsrohr 32 sind sie wie auch der Tauchkern 34 von dem zu steuernden Fluid, in diesem Beispiel Wasser, umgeben.

Das Rastaußenteil 72 umgibt einen Schaftabschnitt 78 der Rasthülse 74 derart, daß diese darin drehbar und längsverschiebbar gelagert ist. Es trägt an seinem außenseitigen Ende zinnenartig einen Kranz von sechs radial wie axial hervortretenden Nockenzähnen 80, die permanent in den Nuten 62 bzw. 64 zu liegen kommen und darin axial zu gleiten vermögen. Axial gesehen setzen sich zur Zahnmittelebene jeweils etwa symmetrische schräge Stirnflächen 82 und 84 der Zähne 80 in die Lücken zwischen den Zähnen hinein fort, so daß sich insgesamt eine stirnseitig etwa zickzackförmig vor- und zurückspringende Wandung 86 des Rastaußenteils 72 ergibt.

Die Rasthülse 74 weist an ihrem außenseitigen Ende in regelmäßiger Verteilung drei radial nach außen hervortretende Zähne 88 auf, die zum Tauchkern 34 hin in gleichem Sinn geneigte schräge Stirnflächen 90 besitzen. Die Neigung der Stirnfläche 90 entspricht derjenigen der schrägen Stirnflächen 56 und 84 an den Leisten 54 bzw. Zähnen 80. Die radiale Höhe der Zähne 88 ist eine solche, daß sie bis auf den Grund der tieferen Nuten 62, d.h. bis zur Innenwand 92 des Kernführungsrohres 32, reichen. So versteht sich, daß die Zähne 88 daran gehindert sind, in die flacheren Nuten 64 einzutreten. Stirnseitig vermögen die Zähne 88 auf den schrägen Stirnflächen 56 der Leisten 54 wie auch auf der Wandung 86 des Rastaußenteils 72 aufzuliegen und zu gleiten. Dazu drückt eine auf dem Federsitzring 76 aufsitzende Wendeldruckfeder 94 die Rasthülse 74 in Richtung auf die Membran 16. Das entgegengesetzte Ende der über den Kopf 60 des Bolzens 58 hinwegreichenden Feder 94 stützt sich an einer Kappe 96 des Rohres 32 ab.

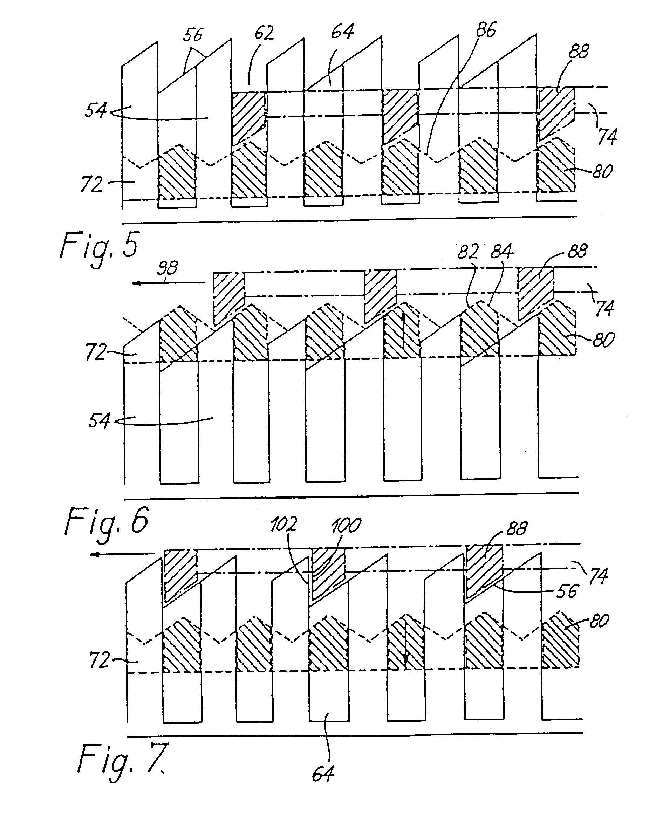

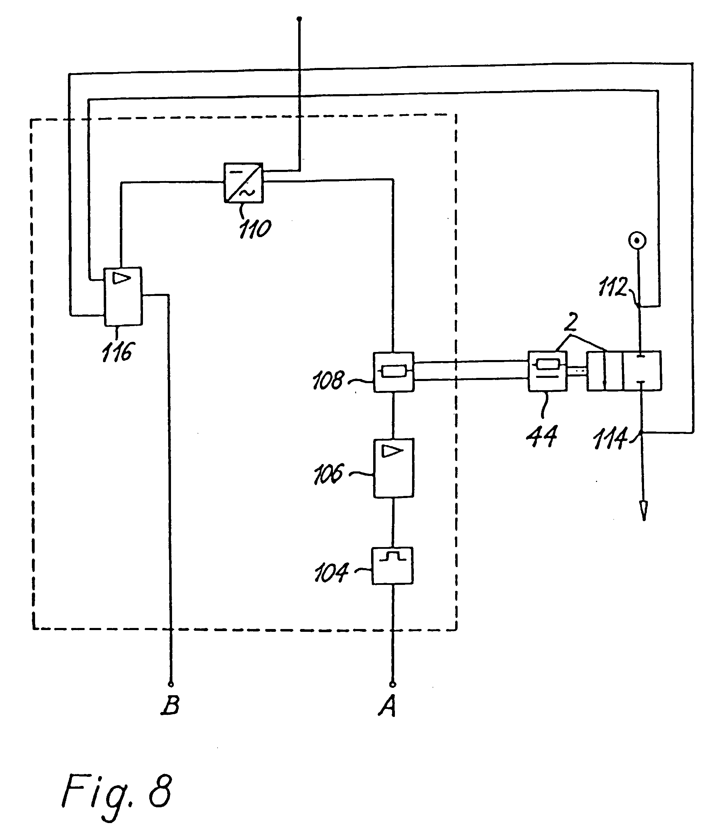

Die Funktion des so weit beschriebenen Gesperres ist folgende: In einer Ausgangsstellung (Fig. 5), bei der die Gummikappe 38 am Tauchkern 34 die Durchbohrung 22 verschließt, befinden sich die drei Zähne der Rasthülse 74 in den tiefen Nuten 62 im Bereich der Leisten 54. Wird nun durch Erregung der Magnetwicklung 44 der Tauchkern 34 mit den Teilen 72, 74 und 76 unter Überwindung der Kraft der Feder 94 angehoben (Fig. 6), so treten die Zähne 88 der Rasthülse 74 aus den Nuten 62 hervor und vermögen auf den schrägen Stirnflächen 84 an dem Rastaußenteil 72 zu gleiten, das selbst durch den fortbestehenden Eingriff seiner Zähne 80 mit den Nuten 62 und 64 an einer Drehbewegung gehindert ist. Hierdurch erfährt die Rasthülse 74 eine Drehung gemäß Pfeil 98 bis die Spitzen der Zähne 88 am Grund zwischen aufeinanderfolgenden Flächen 82 und 84 in den Lücken der Zähne 80 des Rastaußenteils 72 aufliegen. Wird nun wenig später durch Erlöschen der Erregung der Magnetwicklung 44 der Tauchkern 34 freigegeben und daraufhin durch die Feder 94 zurückgedrückt (Fig. 7), so kommen die Zähne 88 der Rasthülse 74 nunmehr auf den schrägen Stirnflächen 56 an den Leisten 54 zur Auflage, wodurch die Rasthülse 74 eine weitere Drehung erfährt, bis die Flanken 100 der Zähne 88 an den Flanken 102 der Leisten 54 anstoßen. Jedoch kommen die Zähne 88 dabei über den flacheren Nuten 64 zu liegen, in die sie nicht einzutreten vermögen. Damit ist die Rasthülse 74 und mit ihr der Tauchkern 34 daran gehindert, in seine Ausgangsstellung zurückzukehren. - Das Gesperre ist eingeklinkt. -

Bei erneuter Erregung der Magnetwicklung 44 wiederholen sich die gleichen Vorgänge, nur kommen dann die Zähne 88 der Rasthülse 74 über den tieferen Nuten 62 zu liegen, in die sie einzutreten vermögen. D.h. nach Erlöschen der betreffenden Erregung der Magnetwicklung 44 kehren die Teile 34, 38, 72, 74 und 76 unter der Einwirkung der Feder 94 in ihre Ausgangsstellung (Fig. 5) zurück.

Da im Falle einer vielleicht einmal eintretenden Fehlbetätigung des vorausgehend beschriebenen Schaltsystems 36 eine eindeutige Zuordnung eines jeden Schalt- bzw. Steuerimpulses zu dem jeweils gewünschten Schaltzustand verlorengehen würde, ist zweckmäßigerweise eine Meldeschaltung vorgesehen, die den jeweils tatsächlich bestehenden Schaltzustand feststellt.

Fig. 8 zeigt ein Beispiel einer solchen Meldeschaltung innerhalb einer Steuerschaltung für die Magnetwicklung 44 des Schaltsystems 36. Diese Steuerschaltung weist eine von einem Eingang A für das jeweilige Steuersignal angesteuerte monostabile Kippschaltung 104, gefolgt von einem Verstärker 106 auf, der ein Relais 108 steuert. Das Relais 108 liefert in einem ersten Schaltzustand, der dem Anliegen eines Steuerimpulses am Eingang A entspricht, einen Schaltimpuls in Form einer Betätigungs-Wechselspannung aus einer Spannungsversorgung 110 an die Magnetwicklung 44. Nach Erlöschen des Steuerimpulses am Eingang A wird die Beaufschlagung der Magnetwicklung 44 mit der Betätigungswechselspannung durch das Relais 108 unterbrochen.

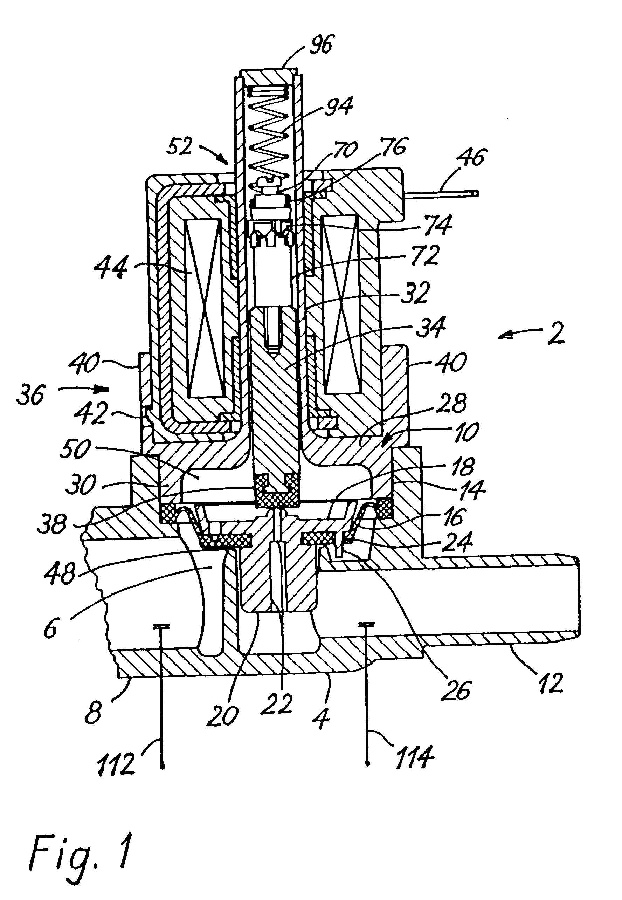

Im Einlaßstutzen 8 und Auslaßstutzen 12 des Ventils sind nun, wie auch in Fig. 1 angedeutet, zwei Fühlelektroden 112 und 114 angeordnet, über die der elektrische Leitungswiderstand in dem gesteuerten Medium, wie z.B. Wasser, zwischen diesen beiden Stellen abtastbar ist. Die Elektroden 112 und 114 sind mit dem Steuereingang eines Transistorverstärkers 116 verbunden, der des weiteren ein Gleichspannungssignal aus der Spannungsversorgung 110 erhält. Der mit dem Schaltzustand des Magnetventils wechselnde elektrische Widerstand zwischen den Elektroden ruft in dem Verstärker 132 unterschiedliche Spannungsabfälle hervor, die sich im Ausgangssignal an einem Ausgang B der betreffenden Meldeschaltung äußern.

Genauer gesagt wird an dem Ausgang B ein Signal mit unterschiedlichen Spannungspegeln ("high" bzw. "low") erhalten, dessen einer als Anzeigesignal für den ausgelenkten Tauchkern 34 zu definieren ist. Der Ausgang B bildet eine Schnittstelle für den Anschluß beliebiger Alarm-, Steuer- oder Regelsysteme, so z.B. einer Standard-Wiederholungsschaltung, die bei festgestellter Fehlbetätigung (Ausbleiben einer Pegeländerung am Ausgang B) den auf den Eingang A gegebenen Steuerimpuls - ggf. mehrmals - wiederholt und nach erfolgloser Wiederholung ein Alarmsignal abgeben kann.

Wie ersichtlich kann der in Fig. 8 gestrichelt umrandete Schaltungsteil in bezug auf die Ansteuerung der Magnetwicklung 44 als austauschbarer Modul ausgebildet werden.

Die Ansteuerung des Relais 108 und der Magnetwicklung 44 mit einer Wechselspannung ist keineswegs zwingend. Vielmehr können die betreffenden Schaltimpulse gewünschtenfalls auch Gleichspannungsimpulse sein. Auf keinen Fall ist jedoch für diese eine jedesmalige Polaritätsänderung erforderlich, ebenso wie ihre Stärke unkritisch ist.

Es versteht sich im übrigen, daß das Gesperre des erfindungsgemäßen Schaltsystems auch in anderer Weise als vorausgehend beschrieben, etwa nach Art dessen aus der DE-PS 36 24 152, ausgebildet sein kann. Des weiteren braucht das Magnetventil kein solches mit Pilotventil zu sein. Vielmehr kann für kleine Drücke und/oder Durchsätze des zu steuernden Mediums in dafür üblicher Weise durch den Tauchkern unmittelbar der Hauptdurchfluß gesteuert werden, während andererseits, bei großen Durchsätzen, ein von dem Schaltsystem gesteuertes Pilotventil auch separat von einem Hauptventil angeordnet sein kann, und dergl. mehr.

## Patentansprüche

1. Bistabiles Magnetventil (2) mit durch Federkraft rückstellbarem Anker in Gestalt eines Tauchkerns (34) innerhalb eines Kernführungsrohres (32) und einer dieses umgebenden einzigen Magnetwicklung (44), dadurch ***gekennzeichnet,***
- daß der Tauchkern (34) in mechanischer Wirkverbindung mit einem koaxial damit angeordneten, durch Überhub abwechselnd ein- und ausklinkbaren und ein längsgeführtes erstes Rastglied (72), ein hier gegen längsverschiebbares und in seiner Überhubposition um einen Teilungswinkel drehbares zweites Rastglied (74) sowie eine zumindest das zweite Rastglied (74) axial druckbelastende Wendeldruckfeder (94) aufweisenden Gesperre (52, 54) steht,
- daß die beiden Rastglieder (72, 74) samt der Feder (94) und dem Tauchkern (34), in Betrieb von dem zu steuernden Medium umgeben, in dem mit einem Ende zu einer Ventilkammer (50) hin offenen, am anderen Ende geschlossenen Kernführungsrohr (32) gelagert sind und
- daß die Wendeldruckfeder (94) zugleich die Rückstellfeder für den Tauchkern (34) bildet.

2. Magnetventil (2) nach Anspruch 1, dadurch ***gekennzeichnet,*** daß die beiden Rastglieder (72, 74) und die Wendeldruckfeder (94) - diese zuäußerst - auf der dem Ventil abgekehrten Seite des Tauchkerns (34) angeordnet sind.

3. Magnetventil (2) nach Anspruch 1 oder 2, dadurch ***gekennzeichnet,*** daß die beiden Rastglieder (72, 74) auf einem - vorzugsweise aus magnetisch neutralem Material bestehenden - axialen Fortsatz (70) des Tauchkerns (34) gelagert sind.

4. Magnetventil (2) nach einem der vorhergehenden Ansprüche, dadurch ***gekennzeichnet,*** daß Führungsmittel (54) für das längsgeführte Rastglied (72) an die Innenwand (92) des Kernführungsrohres (32) angeformt sind.

5. Magnetventil (2) nach einem der vorhergehenden Ansprüche, dadurch ***gekennzeichnet;*** daß die beiden Rastglieder (72, 74) wie auch das Kernführungsrohr (32) aus einem magnetisch neutralen Material mit guten Gleiteigenschaften, wie z.B. einem Polyamid, auch faserarmiert, bestehen.

6. Magnetventil (2) nach einem der vorhergehenden Ansprüche, dadurch ***gekennzeichnet,*** daß das Kernführungsrohr (32) an einen Deckel (28) des Ventils angeformt ist.

7. Magnetventil (2) nach Anspruch 6, dadurch ***gekennzeichnet,*** daß an dem Deckel (28) auf der Seite des Kernführungsrohres (32) Pass- und/oder Rastmittel (40, 42) für die modulartig gekapselte Magnetwicklung (44) angeordnet sind.

8. Magnetventil (2) nach einem der vorhergehenden Ansprüche, dadurch ***gekennzeichnet,*** daß das Ventil ein durch das zu steuernde Medium servounterstütztes Ventil ist.

9. Magnetventil (2) nach einem der vorhergehenden Ansprüche, dadurch ***gekennzeichnet,*** daß es eine Meldeschaltung zum Rückmelden seines jeweiligen Schaltzustandes aufweist.

10. Magnetventil (2) nach Anspruch 9, dadurch ***gekennzeichnet,*** daß die Meldeschaltung die elektrische Leitfähigkeit in dem zu steuernden Medium zwischen Eintritt (8) und Austritt (12) des Ventils erfaßt.

## Claims

1. Bistable solenoid valve (2) having an armature which can be returned by spring force and takes the form of a plunger core (34) within a core guiding tube (32) and a single magnetic winding (44) surrounding the latter, characterized in that
- the plunger core (34) cooperates mechanically with a latching mechanism (52, 54) which is arranged coaxially therewith, and latches and unlatches alternatively by overtravelling, and has a longitudinally guided first latching member (72), a second latching member (74), which can be displaced longitudinally opposite thereto and can rotate in its overtravelled position through a pitch angle, as well as a helical compression spring (94) which axially biases at least the second latching member (74),
- in that, together with the spring (94) and the plunger core (34), the two latching members (72, 74) are surrounded in operation by the medium to be controlled and mounted in the core guiding tube (32), which is open at one end towards a valve chamber (50) and closed at the other end, and
- in that the helical compression spring (94) at the same time forms the return spring for the plunger core (34).

2. Solenoid valve (2) according to Claim 1, characterized in that the two latching members (72, 74) and the helical compression spring (94) are arranged - the latter outermost - on the side of the plunger core (34) averted from the valve.

3. Solenoid valve (2) according to Claim 1 or 2, characterized in that the two latching members (72, 74) are mounted on an axial extension (70) of the plunger core (34) - said axial extension preferably consisting of a magnetically neutral material.

4. Solenoid valve (2) according to one of the preceding claims, characterized in that guiding means (54) for the longitudinally guided latching member (72) are integrally formed on the inner wall (92) of the core guiding tube (32).

5. Solenoid valve (2) according to one of the preceding claims, characterized in that like the core guiding tube (32) as well the two latching members (72, 74) consist of a magnetically neutral material with good sliding properties such as, for example, a polyamide, also fibre-reinforced.

6. Solenoid valve (2) according to one of the preceding claims, characterized in that the core guiding tube (32) is integrally formed on a cover (28) of the valve.

7. Solenoid valve (2) according to Claim 6, characterized in that fitting and/or latching means (40, 42) for the modularly encapsulated magnetic winding (44) are arranged on the cover (28) on the side of the core guiding tube (32).

8. Solenoid valve (2) according to one of the preceding claims, characterized in that the valve is a valve which is servo-assisted by the medium to be controlled.

9. Solenoid valve (2) according to one of the preceding claims, characterized in that it has a signalling circuit for indicating its respective switching state.

10. Solenoid valve (2) according to Claim 9, characterized in that the signalling circuit detects the electrical conductivity in the medium to be controlled between the inlet (8) and outlet (12) of the valve.

## Revendications

1. Electrovanne bistable (2) comprenant une armature en forme de noyau plongeur (34) rappelé par un ressort et placé dans un tube de guidage du noyau (32) ainsi qu'un enroulement unique (44) qui entoure ce tube,
caractérisée en ce que :
- le noyau plongeur (34) coopère mécaniquement avec un cliquet (52, 54) disposé coaxialement par rapport au noyau, ce cliquet étant alternativement verrouillé et déverrouillé par dépassement de course et comportant un premier élément d'arrêt (72) guidé longitudinalement, un deuxième élément d'arrêt (74), guidé longitudinalement vis-à-vis du premier et pouvant pivoter, dans sa position de dépassement de course, d'une valeur de pas angulaire, et un ressort spiral de pression (94) soumettant au moins le deuxième élément d'arrêt (74) à une pression axiale,
- les deux éléments d'arrêt (72, 74) ainsi que le ressort (94) et le noyau plongeur (34) sont disposés, entourés en fonctionnement par le milieu à commander, dans le tube de guidage du noyau (32), une extrémité de ce tube étant ouverte vers une chambre de vanne (50), et l'autre extrémité étant fermée, et
- le ressort spiral de pression (94) constitue en même temps le ressort de rappel du noyau plongeur (34).

2. Electrovanne (2) selon la revendication 1,
caractérisée en ce que les deux éléments d'arrêt (72, 74) et le ressort spiral de pression (94) sont disposés sur le côté opposé à la vanne du noyau plongeur (34), le ressort étant situé le plus à l'extérieur.

3. Electrovanne (2) selon la revendication 1 ou 2,
caractérisée en ce que les deux éléments d'arrêt (72, 74) sont disposés sur un prolongement axial (70) du noyau plongeur (34), ce prolongement étant de préférence réalisé en une matière magnétiquement neutre.

4. Electrovanne (2) selon l'une des revendications précédentes,
caractérisée en ce que des moyens de guidage (54) de l'élément d'arrêt (72) guidé longitudinalement sont venus de moulage avec la paroi intérieure (92) du tube de guidage du noyau (32).

5. Electrovanne (2) selon l'une des revendications précédentes,
caractérisée en ce que les deux éléments d'arrêt (72, 74) ainsi que le tube de guidage du noyau (32) sont réalisés en une matière magnétiquement neutre ayant de bonnes propriétés de coulissement, par exemple en un polyamide, éventuellement renforcé par des fibres.

6. Electrovanne (2) selon l'une des revendications précédentes,
caractérisée en ce que le tube de guidage du noyau (32) est venu de moulage avec un couvercle (28) de la vanne.

7. Electrovanne (2) selon la revendication 6,
caractérisée en ce que des moyens d'emboîtement et/ou de verrouillage (40, 42) pour l'enroulement (44) encapsulé à la manière d'un module sont disposés sur le couvercle (28) du côté du tube de guidage du noyau (32).

8. Electrovanne (2) selon l'une des revendications précédentes,
caractérisée en ce que la vanne est une vanne assistée par le milieu à commander.

9. Electrovanne (2) selon l'une des revendications précédentes,
caractérisée en ce qu'elle comporte un circuit de signalisation pour signaler son état de commutation respectif.

10. Electrovanne (2) selon la revendication 9,
caractérisée en ce que le circuit de signalisation détecte la conductibilité électrique du milieu à commander, entre l'entrée (8) et la sortie (12) de la vanne.
